# EUROPEAN PATENT APPLICATION

(11) **EP 4 086 204 A1**
(43) Date of publication of application: **09.11.2022**
(21) Application number: 21172565.0
(22) Date of filing: 06.05.2021
(51) Int. Cl.: B65G 23/44, G05G 1/00, F16D 11/00, B23Q 11/00

(54) **HANDWHEEL DEVICE FOR ADJUSTMENT OF A MACHINE AND SUCH MACHINE**

(71) Applicant: Sidel Participations, 76930 Octeville-sur-Mer (FR)
(72) Inventor: LANZI, Mauro, 43126 PARMA (IT); FROZI, Andrea, 43126 PARMA (IT)
(74) Representative: Sidel Group

(57) **Abstract**

The invention relates to a handwheel adjustment device (1) and a machine (2) equipped of an adjustment means comprising said handwheel (1) device. Morever, the handwheel device (1) comprises a structure (3), a rotatable shaft (4) extending from a first end (40) to a second end (41), a handle (5) angularly fixed to the shaft first end (40) and a locking means (8) for locking the shaft (4) into an angular lock configuration and for unlocking the shaft (4) into an unlock configuration, wherein the rotation of the handle (5) commands the rotation of the shaft (4) and modify its angular position, characterized in that the locking means (8) comprises a connector (9) with a fixed organ (90) and a mobile organ (91) cooperating together in the lock configuration, the handle (5) being mobile along the shaft, further comprising a repelling means (10) for automatically repelling the handle (5) from the unlock configuration to the lock configuration, and maintaining the organs (90,91) into said lock configuration.

## Description

### Technical Field

The invention relates to the domain of industrial machines for treatment of products.

The term "product" includes an individual object. The product can be of any type.

Especially, the product is a container, such as a bottle or a flask, or even a can. Several products can be grouped into a box, such as a cardboard box. A product can be made of any type of material, in particular made of plastic, metal or even glass. Depending on its shape and material, a product can be rigid or semi-rigid. Such a container is intended to contain, in a non-exhaustive manner, a fluid, a liquid, powders or granules, in particular of the agrifood or of the cosmetic type.

As known, within an industrial line, the products can receive several different successive treatments, such as the manufacture of the container, for example during a plastic injection or stretch-blow molding operation in the case of a plastic bottle, followed by filling and then closing with a cap, and labeling. At the end of these treatments, the products are said to be "final".

In view of their handling and transport, such final products undergo packaging, especially batch packaging, each batch of products comprising a group of several products, gathered in a matrix arrangement. For example, a usual batch of products, such as bottles, groups together six products in two rows and three columns. Once the product groups have been produced, each group can be packaged by coating or casing.

Coating consists of surrounding or covering the group of products with a sheet or film, in order to hold the products together and to facilitate the handling of such a batch thus obtained. Such coating by being carried out through a filming or preferably bundling step, or else by coating by means of a sheet, in particular of paper or cardboard material.

Then for their transport, the batches or crates are stacked on a pallet, eventually with cardboard sheet as layers vertically separating each stack of batches. During these different stages, the products are transported along the production line, in a direction of movement extending longitudinally, from upstream to downstream, between and within the various machines dedicated to each treatment that the products must undergo. Such transport can be carried out through at least one conveyor.

Thenceforth, the invention relates to a treatment machine for any type, for the treatment of any type of products.

According to different preferred embodiments, the treatment machine can be a (de)palletization machine, a pallet handling machine, a filling machine, a labelling machine, a blower or a conveyor. The treatment machine can also be a case packer or a case maker.

Thus the treatment machine comprises a part which needs to be adjusted before or during the process of treatment of the products, especially when the machine is configured for the treatment of different formats of products.

Therefore the machine requires a device for adjusting parameters of said part to fit the products to be treated and/or the process requirements. For example, the position of the machine part can be moved in order to fit the number or the size of the products.

Such device is usually a handwheel device, designed to be manually manipulated by an operator of the machine.

### Background Art

An object of the present invention is to improve a handwheel device for adjustment of a part of a machine.

Usually a known handwheel device comprises a structure, designed to be fixed on a frame of the machine. It also comprises a shaft with a first end and a second end, the shaft extending along a longitudinal axis from the first end to the second end. Moreover, the second end of the shaft is configured to be linked to the machine, for example to a corresponding means to mechanically interact with the shaft to move or change the position of the considered part of the machine during the adjustment.

Thenceforth the shaft is rotatably mounted relative to the structure, and also to the frame of the machine. So the rotation of the shaft induces the interaction with the corresponding means. As example, such corresponding means can be a mechanical cam, that transforms the rotation movement of the shaft into a translation movement, in order to rise or lower, to deplace laterally, to increase or decrease a slope, or to approach or spread the machine part relative to the frame.

In order to be manipulated by an operator, the handwheel device comprises a handle angularly fixed relative to the first end of the shaft. So the rotation of the handle induces the rotation of the shaft to perform the adjustment of the part of the machine.

Moreover in order to avoid any inappropriate or unvoluntary move, the handwheel device comprises a locking means for locking the shaft into a lock configuration, wherein the rotation of the shaft is blocked. The locking means also allows unlocking of the shaft into an unlock configuration, wherein the rotation of the handle commands the rotation of the shaft for modifying the shaft angular position. So the shaft is locked unless an operator unlocks the locking means and then rotatably turns the handle. After such adjustment, the operator must lock back the locking means to block the handle and the shaft into the lock configuration.

Such handwheel device has a major drawback, when an operator does not pay attention to lock back the locking means. Such mistake or oversight regularly happens, so that the handle freely rotates during process, changing the adjustments of the machine part while it is clearly not wanted.

### Summary of Invention

The invention improves a handwheel device for adjustment of a machine to solve the problem of any unvoluntary unlock of the device, except when the operator performs the adjustment.

Thenceforth the handwheel device according to the invention comprises a locking means with a specific connector designed to be simultaneously command when an operator grabs the handle in order to turn it to perform the adjustment. Moreover the connector comprises a fixed organ and a mobile organ cooperating together in the lock configuration, especially as meshed gears. The mobile organ is connected with the handle which is also mobile in a linear way, along the shaft axis from the lock configuration to the unlock configuration, and reversely. So the handle can be pulled/pushed along the axis direction of the shaft: such pull/push movement unlocks the shaft which can be rotate by turning the handle.

Then when the correct angular position is reached by the operator, the handle is pushed/pulled back into the lock configuration, wherein the organs cooperates again and lock the shaft into the lock configuration, avoiding the shaft to angularly move. Moreover, the handwheel device comprises repelling means, which automatically repel the handle into the lock configuration. The repelling means especially maintains the handwheel into the lock configuration, avoiding any angular movement into the lock configuration or any disengagement of the organs.

Therefore the handwheel device according to the invention comprises
- a structure, designed to be fixed on a frame of the machine
- a shaft with a first distal end and a second end, the shaft extending along a longitudinal axis from the first end to the second end, the shaft second end being configured to be linked to the machine,
the shaft being rotatably mounted relative to the structure (and the frame)
- a handle, the handle being angularly fixed relative to the shaft first end,
- a locking means for locking the shaft into a lock configuration, wherein the rotation of the shaft is blocked,
and for unlocking the shaft into an unlock configuration, wherein the rotation of the handle commands the rotation of the shaft for modifying the shaft angular position Such a handwheel device is characterized in that the locking means comprises
- a connector with a fixed organ and a mobile organ cooperating together in the lock configuration, the fixed organ being fixed on the structure, the mobile organ being fixed on the handle,
and in that
the handle being mobile along the shaft axis from the lock configuration to the unlock configuration, and reversely the handwheel device comprising a repelling means for automatically repelling the handle from the unlock configuration to the lock configuration,
the repelling means also maintains the organs into the lock configuration.

According to an embodiment, the handwheel device can comprises
- the connector is a gear, the mobile organ being meshed with the fixed organ into the lock configuration
- the mobile organ is a male gear part with a first set of teeth
- the fixed organ is a female gear part with a second set of teeth the first teeth set and the second teeth set being complementary designed to mesh together.

According to an embodiment, the handwheel device can comprises
- the mobile organ has a cylindrical shape with an outer top face, the first teeth set being circularly arranged on the outer top face,
- the fixed organ has a cylindrical hollow shape with an inner bottom face, the second teeth set being circularly arranged on the inner bottom face.

According to an embodiment, the handwheel device can comprises the handle is mobile along the shaft axis from second end to the first distal end.

According to another embodiment, the handwheel device can comprises the handle is mobile along the shaft axis from the first distal end to the second end.

According to an embodiment, the handwheel device can comprises the repelling means comprises a spring of a compression type or of a traction type, the spring being inserted around the shaft between an inner face of the handle and a stopper, the stopper being fixed on the shaft first end.

According to an embodiment, the handwheel device can comprises the handwheel device further comprises a control means for controlling the adjustment of the angular position of the shaft, when rotating the handle in the unlock configuration, the control means being fixed on the structure and crossed by the shaft.

The invention also relates to a machine comprising at least
- a frame,
- a part, the part being mounted on the frame,
- an adjustment means for modifying and locking a position of the part relative to the frame, the adjustment means being fixed on the frame,
characterized in that
- the adjustment means is a handwheel device according to any of the preceding claims.

According to a preferred example of an embodiment, the machine is a palletization or depalletization machine.

### Brief description of the Drawings

The invention can be better understood on reading the following description given merely by way of example and with reference to the accompanying drawings, in which:
FIG. 1 is a perspective view of an embodiment of a conveyor machine equipped with a handwheel device ;
FIG. 2 is a detailed view of figure 1, especially showing the handwheel device mounted on a frame of the conveyor machine ;
FIG. 3 is an exploded-view of an embodiment of the handwheel device, especially showing the spare inner parts ;
FIG. 4 is a perspective view of an embodiment of a male gear and a female gear of the connector of the device ;
FIG. 5 is a cross-section view of an embodiment of the handwheel device in a lock configuration ; and
FIG. 6 is a similar view of the figure 5 in an unlock configuration of the handwheel device, especially showing the handle pulled to the right direction and the unlock configuration of the gears of the connector.

### Description of Embodiments

The invention relates to a handwheel device 1, hereinafter « device 1 », for adjustment of a machine 2.

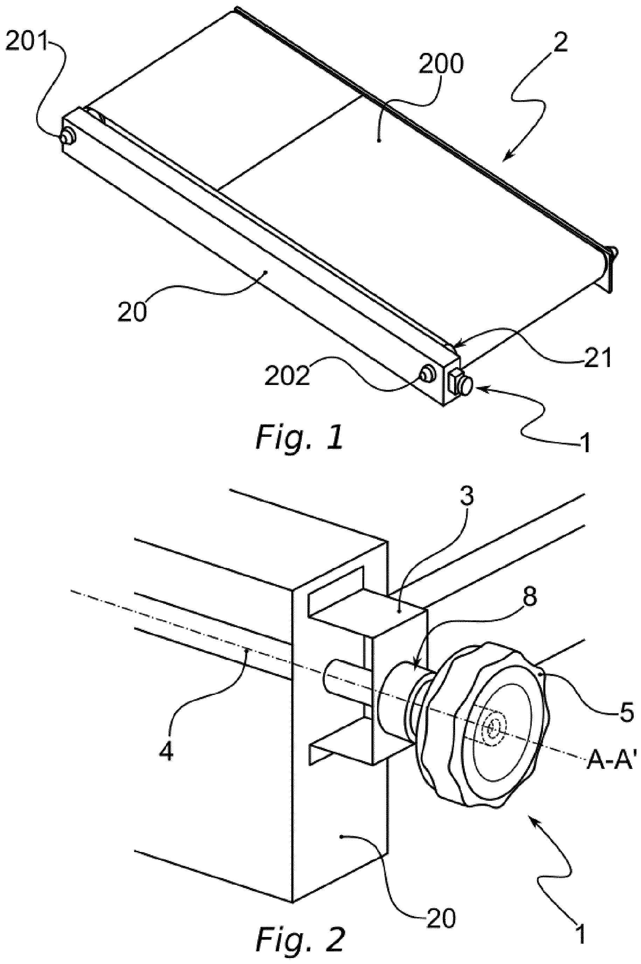

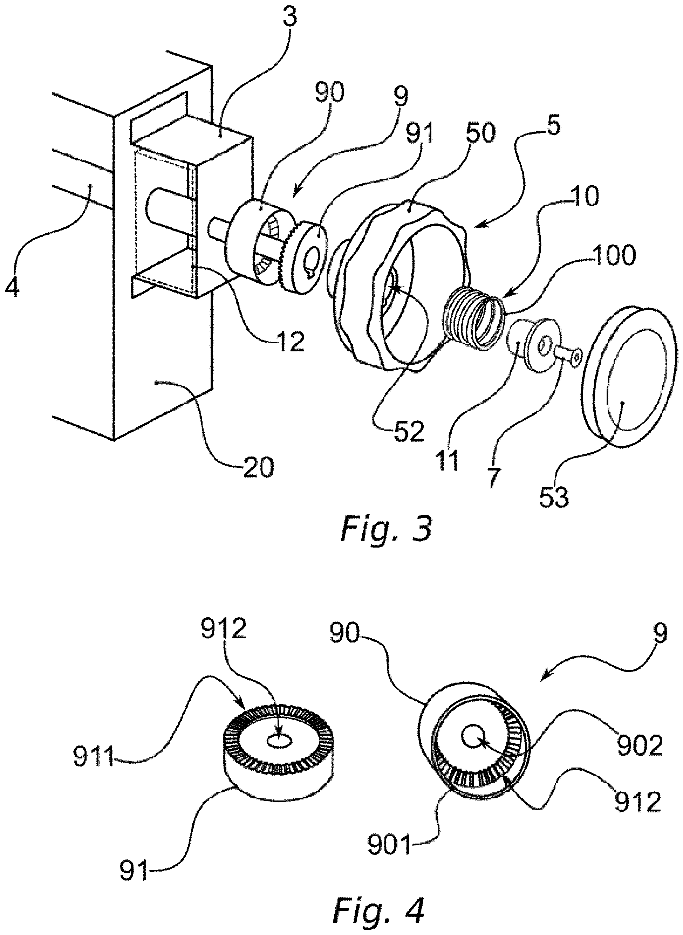

First the device 1 comprises a structure 3. The structure 3 is designed to be fixed on a frame 20 of the machine 2, especially through a suitable fixation means, such as screws and/or bolts. The structure 3 is dedicated as support for different elements of the device 1, mounted thereon.
According to an embodiment, such as shown in figures 2 and 3, the structure 3 globally has an inverted C shape, with upper and lower vertical ends to be fixed on the frame 20.

The device 1 also comprises a shaft 4. The shaft 4 has a first distal 40 end and a second end 41. Moreover the shaft 4 extends along a longitudinal axis A-A' from the first end 40 to the second end 41. The second end 41 of the shaft 4 is configured to be linked to the machine 2, especially to a mobile part of the machine 2. The shaft 4 can be of any type and any shape. According to a preferred embodiment, the shaft 4 is alike a rod. The shaft 4 can have a circular or a polygonal cross-section. The shaft 4 can be made of any type of material, especially made of a metallic material.

Moreover the shaft 4 is rotatably mounted relative to the structure 2, especially relative to the frame 20 of the machine 2. So the shaft 4 can turn relative to the structure 3 of the device 1.
Also the rotation of the shaft 4 allows an adjustment of the mobile part of the machine 2. As aforementioned such adjustment can be needed before or during the process of treatment of the products by the machine 2, especially when the machine 2 is configured for the treatment of different formats of products. For example, the position of the mobile part of the machine 2 can be moved in order to fit the number or the size of the products. Such adjustment can be increasing or decreasing a vertical and/or horizontal position of the mobile part relative to the frame 20, also raising or lowering, spreading or closing.

Such adjustment is manually realized by an operator. Therefore the device 1 comprises a handle 5.

The handle 5 can be of any type, suitable to be gripped by a hand of the operator. According to an embodiment, the handle 5 globally has a round cylindrical shape. An outer wall 50 of the handle 5 can comprise bumps, in order to facilitate gripping by the operator hand. The bumps can regularly extend around the outer wall 50, or not.
The handle 5 also comprises an inner part 51 designed to cooperate with the shaft 4, so that the rotation of the handle 5 induces the rotation of the shaft 4. In other words, the handle 5 is angularly fixed relative to the first end 40 of the shaft 4.

According to an embodiment, such as shown in figure 3, the handle 5 comprises a hole 52, which is complementary dimensioned relative to the periphery of the shaft 4, so that the first end 40 can be inserted into the hole 52.
Moreover the handle 5 globally has a hollow shape at an outer end, in order to inwardly access into the handle 5, when mounting or unmounting the handle 5 relative to the shaft 4.

According to an embodiment, such as shown in figure 3, the handle 5 comprises a lid 53, such as a cap, in order to close the opening of the hollow shape of the handle 5 and protect the inside.

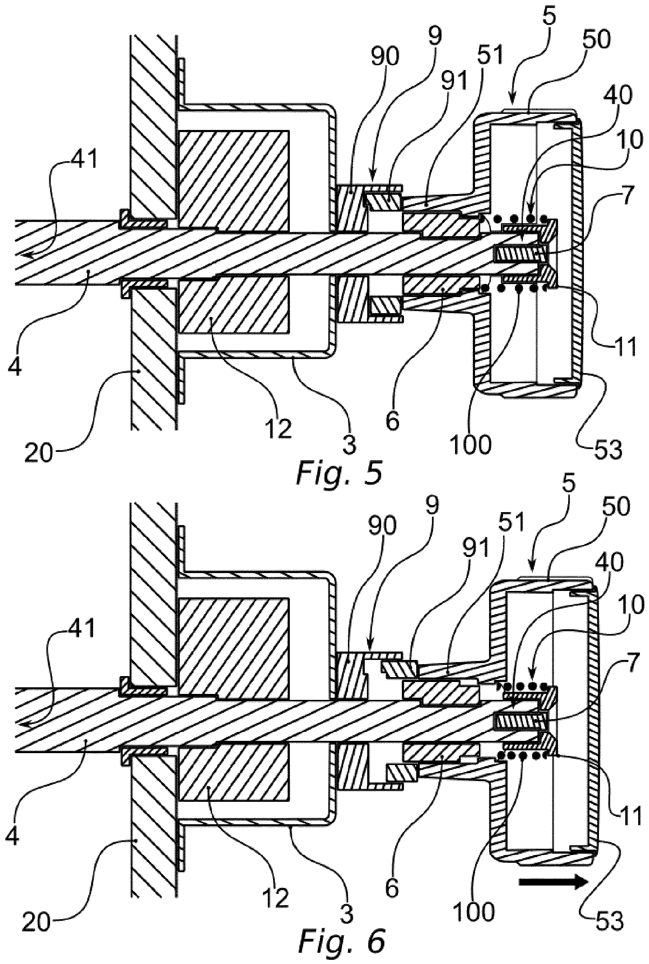

Thus, according to an embodiment, such as visible in figures 5 and 6, the device 1 comprises an inner key 6, hereinafter « key 6 ». Such key 6 globally has a cylindrical hollow shape. The key 6 angularly fixes the shaft 4 relative to the handle 4, especially through an inner tongue 60. Such tongue 60 cooperates into a complementary notch made into the shaft 4.

Especially the device 1 can comprise a fixing means of any type, to secure the handle 5 with the first end 40 of the shaft 4.
According to a preferred embodiment, such as visible in figure 3, the fixing means comprises a screw 7. Such screw 7 is designed to be screwed and unscrewed into a complementary inner thread made into the key 6 and/or into the first end 40 of the shaft 4.

Furthermore, the device 1 comprises a locking means 8 for locking the shaft 4 into a lock configuration, wherein the rotation of the shaft 4 is blocked, and for unlocking the shaft 4 into an unlock configuration, wherein the rotation of the handle 5 commands the rotation of the shaft 4 for modifying the shaft angular position.

According to the invention, the device 1 is configured to ensure an easy way for the angular adjustment by rotating the handle 5, avoiding any risk of further unvoluntary rotation.

Therefore the locking means 8 comprises a connector 9 with a fixed organ 90 and a mobile organ 91. The organs 90,91 cooperate together in the lock configuration, so that they cannot rotate relative to each other into said lock configuration.

According to an embodiment, such as shown in figure 4, the connector 9 is a gear. So the mobile organ 91 is meshed with the fixed organ 90 into the lock configuration.
Moreover the mobile organ 91 is a gear part with a first set of teeth 910, where the fixed organ 90 is a gear part with a second set of teeth 900, the first teeth set 910 and the second teeth set 900 being complementary designed to mesh together.

According to an embodiment, such as shown in figure 2, the connector 9 globally has a cylindrical shape.
Moreover, such as shown in figures 3 and 4, the mobile organ 91 globally has a disc shape, while the fixed organ 90 has an hollow disc shape with a peripheral wall 901. So the mobile organ 91 has a male shape, while the fixed organ 90 has a complementary female shape, so that the male mobile organ 91 can be inserted into the female fixe organ 90.

According to an embodiment, such as shown in figures 3 and 4, the mobile organ 91 has a cylindrical shape with an outer top face 911, the first teeth set 910 being circularly arranged on the outer top face 911.
Moreover the teeth first set 910 of the mobile organ 91 extends on a top face 911, while the teeth second set 900 of the fixed organ 90 extends on an inner background face 901.
According to another embodiment, not shown, the teeth first set 910 of the mobile organ 91 outwardly extends around the periphery, while the teeth second set 900 of the fixed organ 90 inwardly extends along the peripheral wall. According to another embodiment, not shown, the fixed organ 90 has a male shape, while the mobile organ 91 has a female shape.

Moreover, first, the fixed organ 90 is fixed on the structure 3.

So the fixed organ 90 is secured on the structure 3 and cannot move. Only the shaft 4 can rotate relative to the fixed organ 9.
According to an embodiment, such as shown in figure 4, the fixed organ 90 comprises an inner hole 902, complementary dimensioned relative to the diameter of the shaft 4, so that said shaft 4 can be inserted and transverse the fixed organ 90. In a same way, the mobile organ 91 also comprises an inner hole 912, so that said shaft 4 can be inserted and transverse the mobile organ 91.

Then, the mobile organ 91 is fixed on the handle 5. Especially the mobile organ 91 is secured relative to the handle 5, through a specific mounting, for example thanks the key 6 and the screw 7, or any type of fixation with the handle 5, especially with the inner part 51 of the handle 5.

Thus, as the mobile organ 91 is fixed relative to the handle 5, said mobile organ 91 jointly turns when rotating said handle 5 and angularly moving the shaft 4 into the unlock configuration. Reversely, into the lock configuration, the mobile organ 91 cooperates with the fixed organ 90, avoiding the handle 5 to turn.

Furthermore, in order to move the device 1 from the lock configuration to the unlock configuration, the handle 5 is mobile along the axis A-A' of the shaft 4.

According to an embodiment, such as shown in figures 5 and 6, the handle 5 is mobile along the axis A-A' of the shaft 4 from second end 41 to the first distal end 40. So the handle 5 is pulled to move from the lock configuration to the unlock configuration, and reversely pushed to move back to the lock configuration. Such pulled movement is especially visible in figure 6, along a left to right direction represented by an arrow.
According to another embodiment, not shown, the handle 5 is mobile along the axis A-A' of the shaft 4 from the first distal end 40 to the second end 41. So the handle 5 is pushed to move from the lock configuration to the unlock configuration, and reversely pulled to move back to the lock configuration.

Reversely from the unlock configuration to the lock configuration, the handle 5 is also mobile along the axis A-A' of the shaft 4.

Moreover the device 1 comprises a repelling means 10 for automatically repelling the handle 5 from the unlock configuration to the lock configuration. In other words, the repelling means 10 apply a counter force to automatically move back the handle 5 to its initial longitudinal position in the lock configuration, so that the repelling means 10 maintains the organs 90,91 into the lock configuration.

The repelling means 10 can be of any type.

According to an embodiment, such as shown in figures 3 and also in figures 5 and 6, the repelling means 10 comprises a spring 100 of a compression type. Moreover, the spring 100 is inserted around the shaft 4 between an inner face of the handle 5 and a stopper 11. Such stopper 11 is also fixed on the first end 40 of the shaft 4, especially thanks to the screw 7.
So when pulling the handle 5, the spring 100 is compressed, as shown in figure 6. Then when the operator releases the handle 5, the spring 100 automatically repels the handle 5 in a longitudinal way, so that the handle 5 comes back into the lock configuration.

According to another embodiment, not shown, the repelling means 10 comprises a spring of a traction type, with a specific mounting relative to the device 1.

According to an embodiment, the device 1 comprises a control means 12 for controlling the adjustment of the angular position of the shaft 4, when rotating the handle 5 in the unlock configuration.

Moreover the control means 12 is fixed on the structure 3 and crossed by the shaft 4. The figure 3 shows in dot line a control means 12, which is inserted inside the inverted C shape of the structure 3 and crossed by the shaft 4.

Such control means can be of any type, especially a digital angular indicator. The control means can usually has light indicators, like a red light and a green light (such as LED for « Light Emitting Diode »), to visually indicate to the operator when a correct angular position is reached when turning the handle 5, or not.

The control means can be electronically linked to a computer console of the machine 2, in order to exchange data, such as the correct angular positioned. Also the console can avoid the run of the machine 2, unless the correct position is reached.

The invention also relates to the machine 2.

The machine 2 can be of any type. The machine 2 is dedicated for the treatment of products.

As aforementioned, the products can be a container, such as a bottle or a flask, or a can. Several products can be grouped and packed, into a box or a crate, such as a cardboard box, or also packed. Boxes or packs of products can be stacked together, especially on a pallet, for their handling and transport.

So the type of the machine 2 depends on the treatment to be applied to the products. Such machine 2 can be dedicated for the handling of the products, of the boxes or packs of products, and also to any other element necessary for the treatment, such as the handling of a pallet, a cardoard to make a box or a crate, a cardboard to be placed as a layers between to raws of stacked products, or else.

Therefore, the machine 2 comprises at least a frame 20 and a part 21, which is mounted on the frame 20.

Especially the position of the part 21 can be adjusted relative to the frame 20, in order to fit the treatment of the products.
As aforementioned, the adjustment of the part 21 can be needed when changing the product format to be treated, and also to keep production requirements for a well running of the machine 2.

As example, such as shown in figure 1, the machine 2 is a conveyor, with an endless belt 200. The belt 200 is rolled around rollers 201,202, which are rotatably mounted on the frame 20.
So the part 21 to be adjusted can be the position of the roller 201,202 relative to the frame 20, or the tension of the belt 200 by spreading the distance between the rollers 201,202. The adjustment can also concern the variation of the slope of the machine 2, to be horizontal or inclined.

Therefore, the machine 2 comprises an adjustment means for modifying and locking a position of the part 21 relative to the frame 20, the adjustment means being fixed on the frame 20.

According to the invention, the adjustment means is the handwheel device 1, such as detailed above.
As aforementioned, the handwheel device 1 is fixed on the frame 20 of the machine 2, through the structure 3. Moreover, the second end 41 of the shaft 4 is connected through a suitable means depending on how the part 21 of the machine 2 should be adjusted.

Thus, for example, a part 21 of the machine 2 can be a guiding wall which is positioned in front of a layer. When pushing the layer, the guiding wall guides the edge of the layer or acts as a stopper against said layer edge.
So, during a change over, when the format of the layer and/or of the products to be treated is changed, the position of the guiding wall must be adjusted, so must be moved and locked into the correct position, in order to perfectly fit the new format. Such position modification is easily applied thanks to the handwheel device 1.

According to an embodiment, the machine 2 is a palletization or depalletization machine.

By integrating the locking inside the handwheel device 1, the invention allows a safer way for adjustment through a single operation. The operator is sure to lock the position after adjustment, avoiding any unvoluntary change during the process, risking of changing the well treatment of the products, or eventually damaging the machine 2.

## Claims

1. A handwheel device (1) for adjustment of a machine (2), the handwheel device (1) comprising
- a structure (3), designed to be fixed on a frame (20) of the machine (2),
- a shaft (4) with a first distal end (40) and a second end (41), the shaft (4) extending along a longitudinal axis (A-A') from the first end (40) to the second end (41), the shaft second end (41) being configured to be linked to the machine (2),
the shaft (4) being rotatably mounted relative to the structure (2)
- a handle (5), the handle (4) being angularly fixed relative to the shaft first end (40),
- a locking means (8) for locking the shaft (4) into a lock configuration, wherein the rotation of the shaft (4) is blocked,
and for unlocking the shaft (4) into an unlock configuration, wherein the rotation of the handle (5) commands the rotation of the shaft (4) for modifying the shaft (4) angular position,
**characterized in that**
the locking means (8) comprises
- a connector (9) with a fixed organ (90) and a mobile organ (91) cooperating together in the lock configuration, the fixed organ (90) being fixed on the structure (3), the mobile organ (91) being fixed on the handle (5),
**and in that**
the handle (5) is mobile along the shaft axis from the lock configuration to the unlock configuration,
and reversely the handwheel device (1) comprising a repelling means (10) for automatically repelling the handle (5) from the unlock configuration to the lock configuration,
the repelling means (10) also maintains the organs (90,91) into the lock configuration.

2. Handwheel device (1) according to claim 1, **characterized in that**
- the connector (9) is a gear, the mobile organ (91) being meshed with the fixed organ (90) into the lock configuration
- the mobile organ (91) is a male gear part with a first set (910) of teeth,
- the fixed organ (90) is a female gear part with a second set (900) of teeth,
the first teeth set (910) and the second teeth set (910) being complementary designed to mesh together.

3. Handwheel device (1) according to claim 2, **characterized in that**
- the mobile organ (91) has a cylindrical shape with an outer top face (911), the first teeth set (910) being circularly arranged on the outer top face,
- the fixed organ (90) has a cylindrical hollow shape with an inner bottom face, the second teeth set (900) being circularly arranged on the inner bottom face.

4. Handwheel device (1) according to any of the preceding claims, **characterized in that**
- the handle (5) is mobile along the shaft axis (A-A') from second end (41) to the first distal end (40).

5. Handwheel device (1) according to any of the claims 1 to 3, **characterized in that**
- the handle (5) is mobile along the shaft axis (A-A' from the first distal end (40) to the second end (41).

6. Handwheel device (1) according to any of the preceding claims, **characterized in that**
- the repelling means (10) comprises a spring (100) of a compression type or of a traction type, the spring (100) being inserted around the shaft (4) between an inner face of the handle (5) and a stopper (11), the stopper (11) being fixed on the shaft first end (40).

7. Handwheel device (1) according to any of the preceding claims, **characterized in that** it further comprises
- a control means (12) for controlling the adjustment of the angular position of the shaft (4), when rotating the handle (5) in the unlock configuration,
the control means (12) being fixed on the structure (3) and crossed by the shaft (4).

8. A machine (2), comprising at least
- a frame (20),
- a part (21), the part (21) being mounted on the frame (20),
- an adjustment means for modifying and locking a position of the part (21) relative to the frame (20), the adjustment means being fixed on the frame (20),
**characterized in that**
- the adjustment means is a handwheel device (1) according to any of the preceding claims.

9. Machine (2) according to claim 8, **characterized in that**
- the machine (2) is a palletization or depalletization machine.
